# EUROPEAN PATENT APPLICATION

(11) **EP 3 067 243 A1**
(43) Date of publication of application: **14.09.2016**
(21) Application number: 14859602.6
(22) Date of filing: 25.09.2014
(51) Int. Cl.: B60W 10/06, B60W 10/04, B60W 10/20, B60W 30/12, B62D 6/00, F02D 29/02

(54) **VEHICLE CONTROL APPARATUS**

(30) Priority: 08.11.2013 JP 2013232477
(71) Applicant: TOYOTA JIDOSHA KABUSHIKI KAISHA, Toyota-shi, Aichi-ken 471-8571 (JP)
(72) Inventor: SEGUCHI, Hiroaki, Toyota-shi Aichi 471-8571 (JP)
(74) Representative: TBK
(86) International application number: PCT/JP2014/075501
(87) International publication number: WO 2015/068488

(57) **Abstract**

A vehicle control apparatus includes an idling stop control apparatus configured to operate in a situation where a vehicle speed is less than or equal to a predetermined vehicle speed to stop or restart an engine when a predetermined parameter related to steering meets a predetermined condition and a lane keeping assist control apparatus configured to operate in the situation where the vehicle speed is less than or equal to the predetermined vehicle speed to generate a steering force with an actuator according to a detection result of a lane boundary sign, etc. The predetermined condition is set such that the engine is easier to be stopped or more difficult to be restarted in a case where the lane keeping assist control apparatus is in a predetermined operation state than the engine is in a case where the lane keeping assist control apparatus is in another state.

## Description

### [Technical Field]

The disclosure is related to a vehicle control apparatus.

### [Background Art]

A vehicle control apparatus that prevents an automatic stop process for an engine when a steering angle exceeds an automatic stop determination steering angle in a decelerated state is known (Patent Literature 1) in which the automatic stop determination steering angle is set such that the automatic stop determination steering angle becomes greater as the vehicle speed becomes lower.

### [Citation List]

### [Patent Literature 1]

[PTL 1] Japanese Laid-open Patent Publication No. 2013-064345

### [Summary]

### [Technical Problem]

However, with respect to a vehicle in which idling stop control is performed, performing lane keeping assist control to generate a steering force with an actuator according to a detection result of a lane boundary sign (a white line, for example) may causes the following problem. In a configuration in which the lane keeping assist control is performed, the steering angle is generated not only due to an operation of a driver but also due to the lane keeping assist control driving an actuator. Preventing the automatic stop process for the engine in the case where the steering angle is generated due to the lane keeping assist control driving an actuator, as is the case with the steering angle being generated due to the operation of the driver, may cause the driver to feel strange. Specifically, when the engine is not stopped due to the lane keeping assist control, the driver may feel strange because the engine is not stopped regardless of the steering operation not being performed by the driver. Further, this means that the engine is not stopped even in a situation where the engine can be appropriately stopped, which prevents the improved fuel economy. Such a problem also holds true with respect to a time of restarting the engine. Specifically, in the case of restarting the engine, the engine may be restarted at an earlier timing due to the lane keeping assist control.

Therefore, it is an object of the present disclosure to provide a vehicle control apparatus that can appropriately perform idling stop control as well as lane keeping assist control.

### [Solution to Problem]

According to one aspect of the present disclosure, a vehicle control apparatus is provided, which includes:
an idling stop control apparatus configured to operate in a situation where a vehicle speed is less than or equal to a predetermined vehicle speed to stop or restart an engine when a predetermined parameter related to steering meets a predetermined condition; and
a lane keeping assist control apparatus configured to operate even in the situation where the vehicle speed is less than or equal to the predetermined vehicle speed to generate a steering force with an actuator according to at least one of a detection result of a lane boundary sign and a detection result of an object having a predetermined positional relationship with respect to the lane boundary sign, wherein
the predetermined condition is set such that the engine is easier to be stopped or more difficult to be restarted in a case where the lane keeping assist control apparatus is in a predetermined operation state than the engine is in a case where the lane keeping assist control apparatus is in another state.
With this arrangement, it becomes possible to appropriately perform the idling stop control as well as the lane keeping assist control, because the engine is easier to be stopped or more difficult to be restarted in a case where the lane keeping assist control apparatus is in a predetermined operation state than the engine is in a case where the lane keeping assist control apparatus is in another state.

### [Advantageous Effects of Invention]

According to the present disclosure, a vehicle control apparatus that can appropriately perform the idling stop control as well as the lane keeping assist control can be obtained.

### [Brief Description of Drawings]

[Fig. 1]

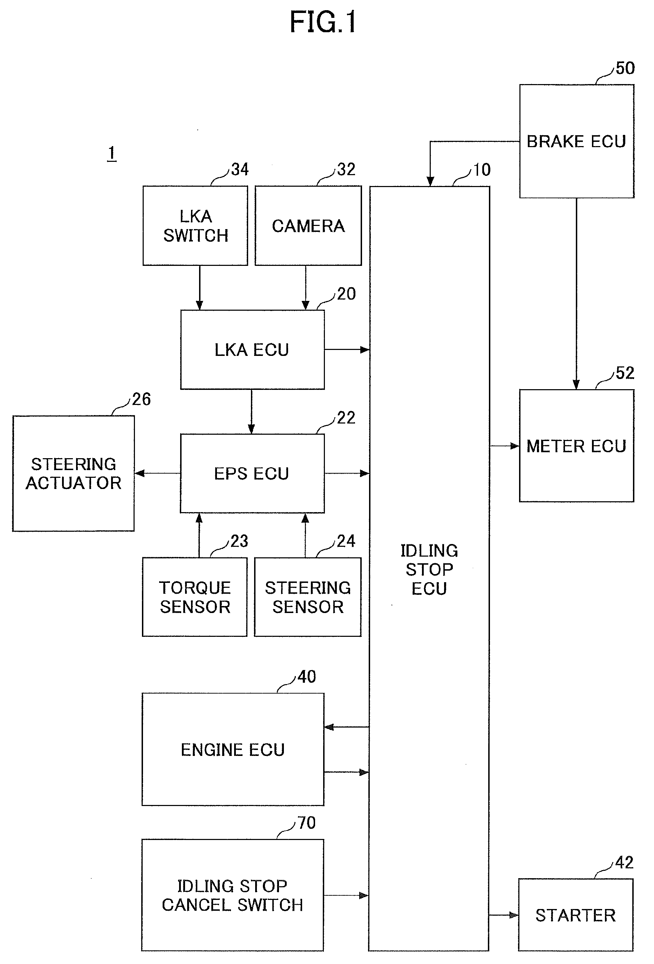

   Fig. 1 is a diagram schematically illustrating a configuration of a vehicle control apparatus 1 according to an embodiment.
[Fig.2]

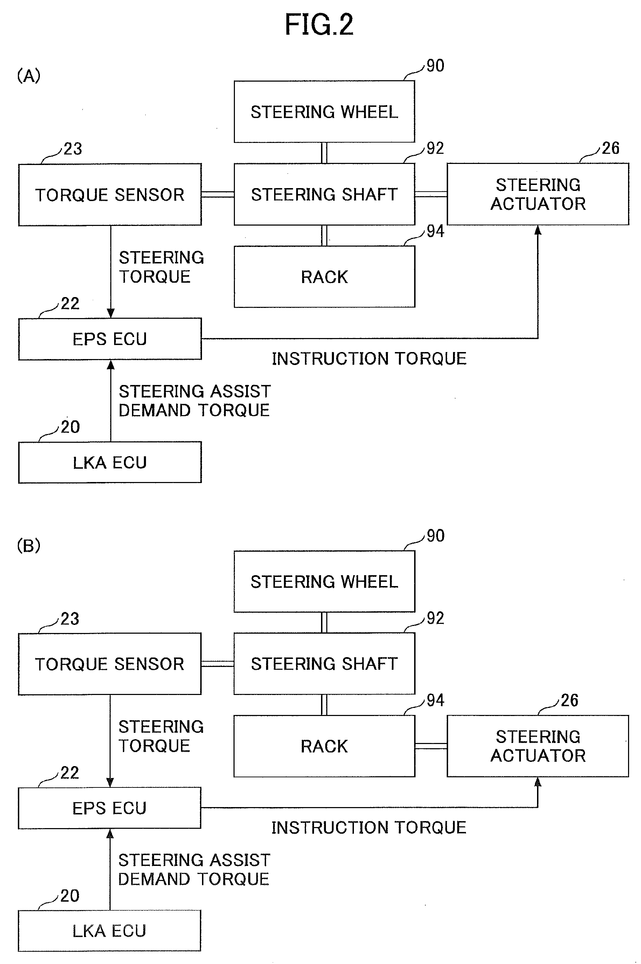

   Fig. 2 is a diagram illustrating an example of a steering system.
[Fig.3]

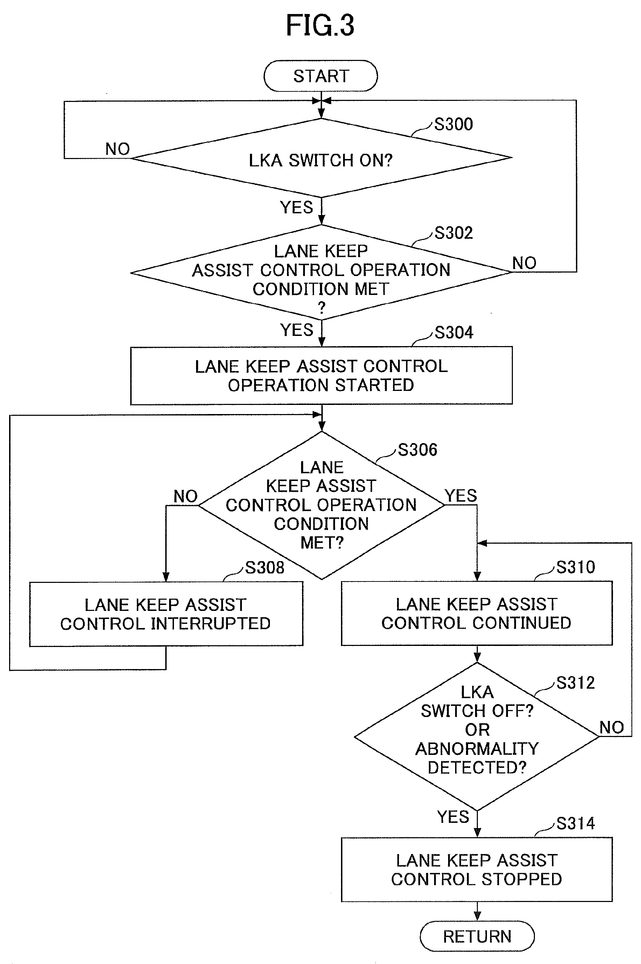

   Fig. 3 is a flowchart illustrating an example of a process executed by a LKA ECU 20.
[Fig.4]

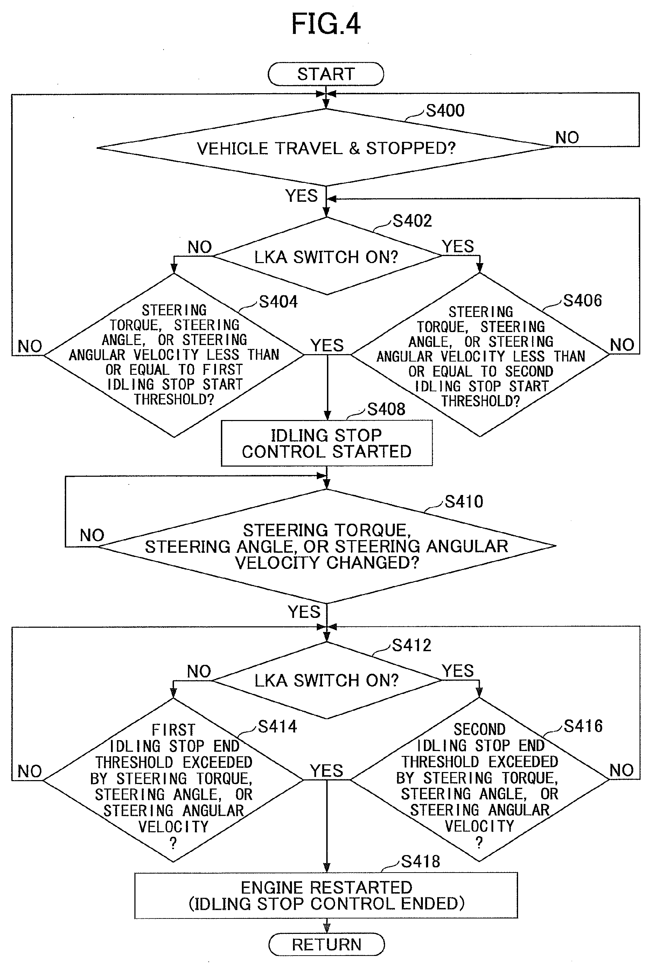

   Fig. 4 is a flowchart illustrating an example of a process executed by an idling stop ECU 10.
[Fig.5]

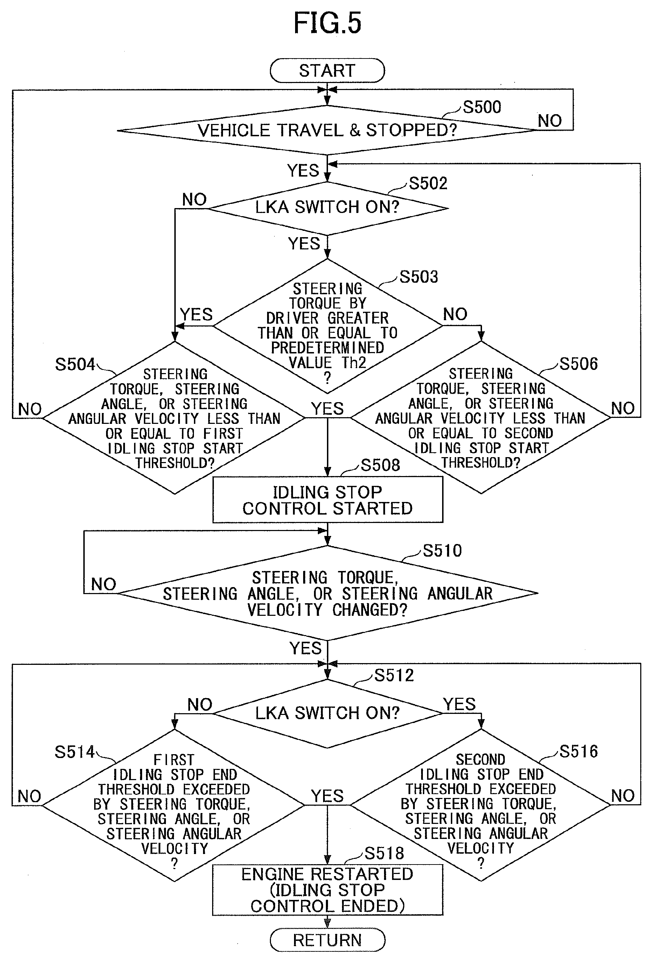

   Fig. 5 is a flowchart illustrating another example of a process executed by the idling stop ECU 10.
[Fig.6]

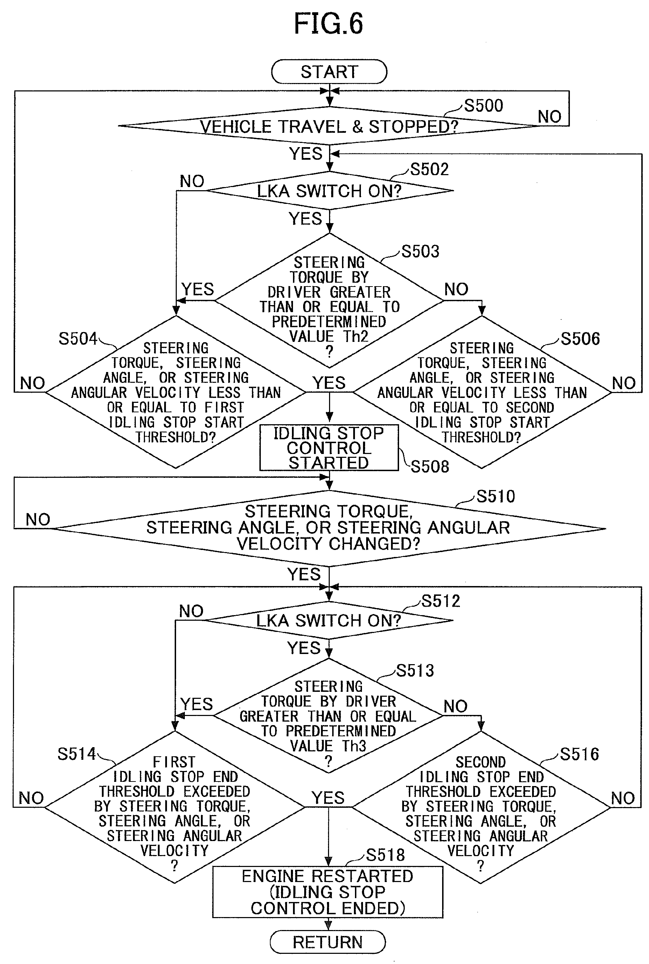

   Fig. 6 is a flowchart illustrating yet another example of a process executed by the idling stop ECU 10.
[Fig.7]

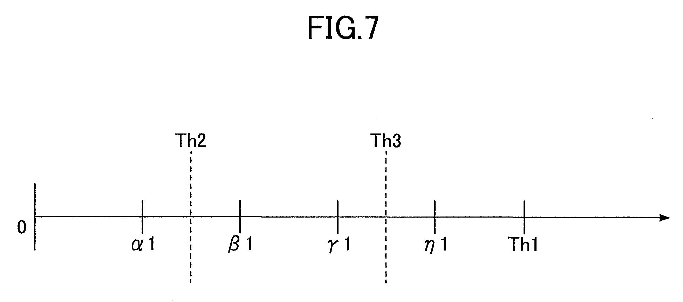

   Fig. 7 is a diagram illustrating an example of a relationship between thresholds, etc., used in the example illustrated in Fig. 6.
[Fig.8]

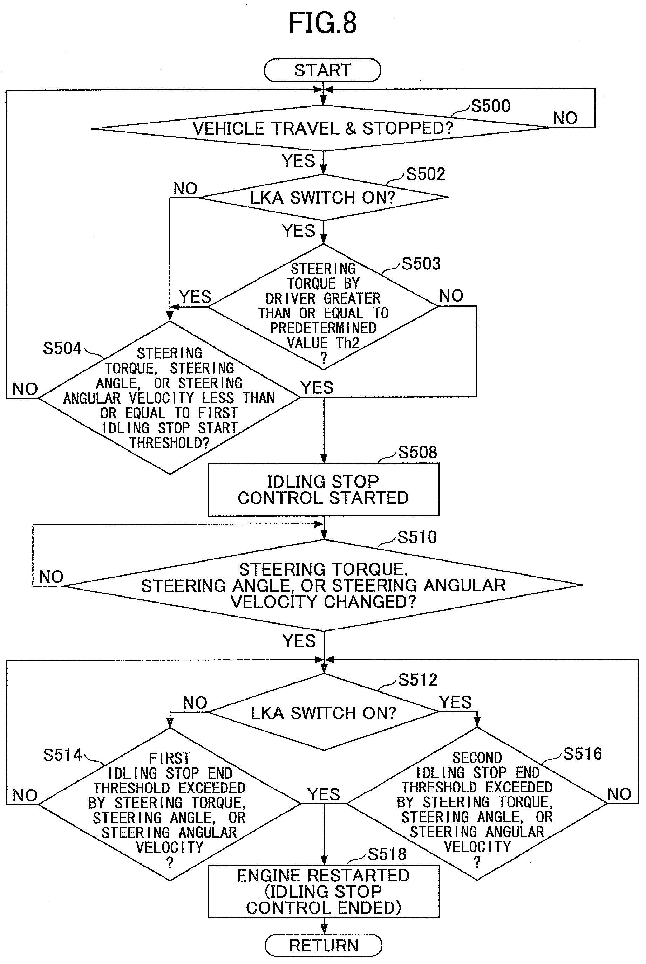

   Fig. 8 is a flowchart illustrating yet another example of a process executed by the idling stop ECU 10.
[Fig.9]

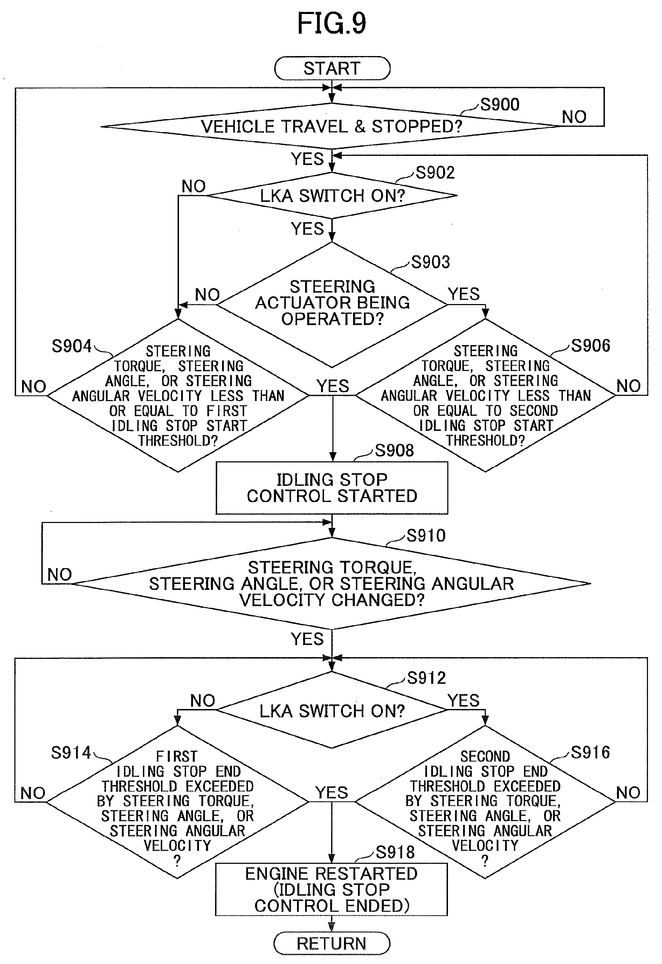

   Fig. 9 is a flowchart illustrating yet another example of a process executed by the idling stop ECU 10.
[Fig.10]

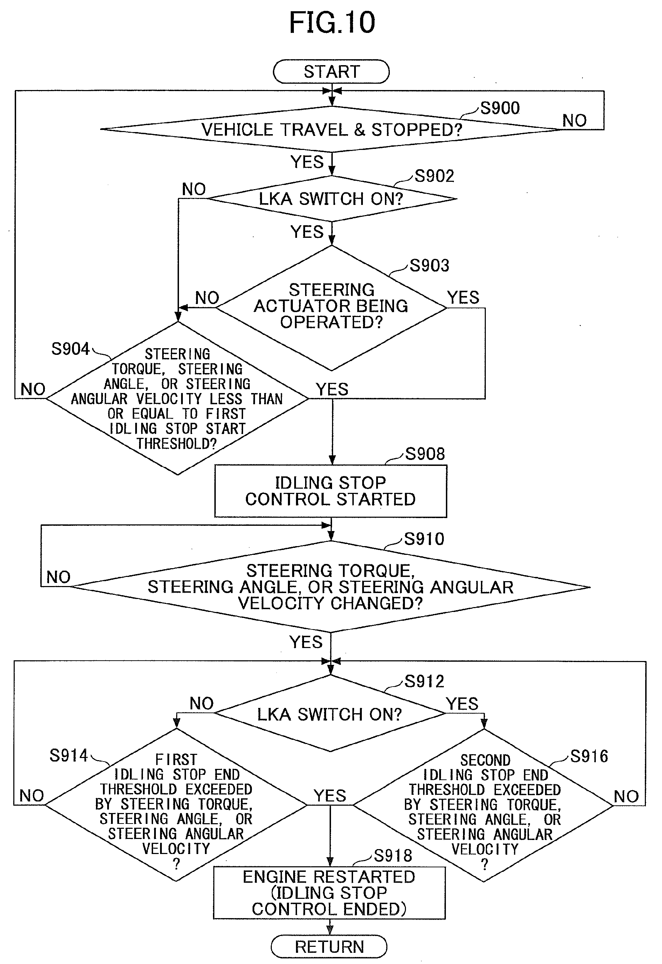

   Fig. 10 is a flowchart illustrating yet another example of a process executed by the idling stop ECU 10.
[Fig.11]

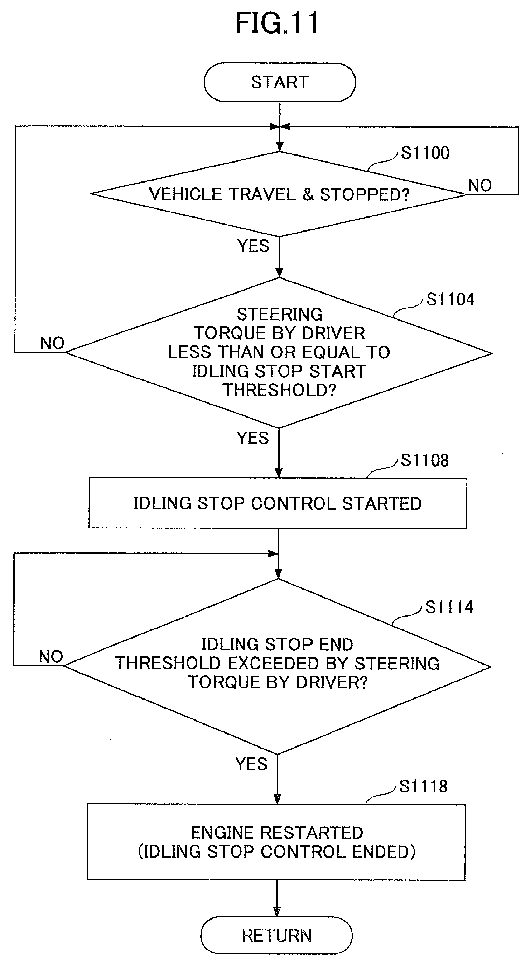

   Fig. 11 is a flowchart illustrating yet another example of a process executed by the idling stop ECU 10.
[Fig.12]

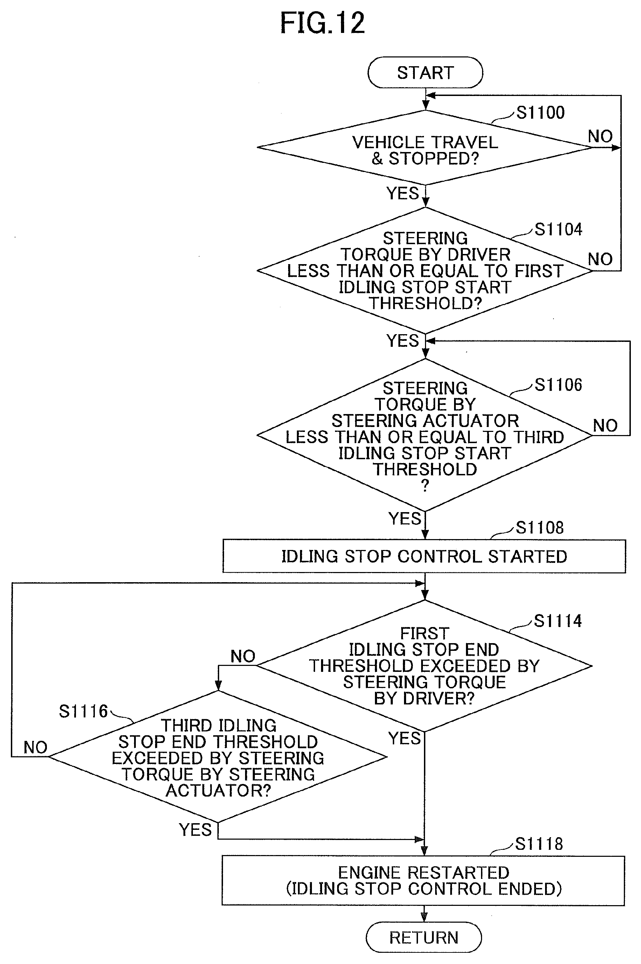

   Fig. 12 is a flowchart illustrating yet another example of a process executed by the idling stop ECU 10.

### [Description of Embodiments]

In the following, embodiments are described in detail with reference to appended drawings.

Fig. 1 is a diagram schematically illustrating a configuration of a vehicle control apparatus 1 according to an embodiment. Fig. 2 is a diagram illustrating an example of a steering system, in which (A) illustrates an example of a configuration in which a steering actuator 26 is installed in a steering column, and (B) illustrates an example of a configuration in which the steering actuator 26 is installed for a rack (bar). It is noted that connections between elements in Fig. 1 are arbitrary. For example, the connection ways may include a connection via a bus such as a CAN (controller area network), etc., an indirect connection via another ECU, etc., a direct connection, or a connection that enables wireless communication. It is noted that, in Fig. 2, a mechanical connection is expressed with a double line and an electric connection is expressed with a single line.

The vehicle control apparatus 1 includes an idling stop ECU (Electronic Control Unit) 10, and a LKA (Lane Keeping Assist) ECU 20. The idling stop ECU 10 and the LKA ECU 20 may be embodied by microcomputers, etc., respectively. It is noted that a distribution of functions among the ECUs (including an EPS ECU 22, etc.) is arbitrary. For example, a part or all of the functions of the idling stop ECU 10 may be implemented by the LKA ECU 20 and/or the an engine ECU 40, or reversely a part or all of the functions of the LKA ECU 20 may be implemented by the idling stop ECU 10.

The idling stop ECU 10 is coupled to the EPS ECU 22. The EPS ECU 22 is coupled to a torque sensor 23 that detects a steering torque applied to a steering shaft 92, and a steering sensor 24 that detects a steering angle of the steering shaft 92 (or a steering wheel).

The EPS ECU 22 supplies the idling stop ECU 10 with the steering torque detected by the torque sensor 23 and the steering angle detected by the steering sensor 24. Further, the EPS ECU 22 calculates, based on a history of the steering angle detected by the steering sensor 24, a steering angular velocity (a change amount of the steering angle per an unit time or a predetermined time), and supplies the idling stop ECU 10 with the calculated steering angular velocity.

Further, the EPS ECU 22 is connected to a steering actuator 26. The EPS ECU 22 controls the steering actuator 26 in response to a steering assist demand torque from the LKA ECU 20. For example, in the example illustrated in Fig. 2, the EPS ECU 22 determines, based on a steering assist demand torque from the LKA ECU 20 and the steering torque detected by the torque sensor 23, an instruction torque (control value) to implement, with feedback control, for example, the steering assist demand torque. In this way, a steering torque according to the steering assist demand torque from the LKA ECU 20 is generated. The steering actuator 26 may include arbitrary configurations for generating the steering torque (steering force). For example, the steering actuator 26 may be an assist motor that is used for an assist control for adding an assist torque in the steering direction of the driver. It is noted that the steering actuator 26 is typically an electric motor; however, the steering actuator 26 may be a hydraulic actuator.

It is noted that, in the following, as a premise, it is assumed that the steering actuator 26, the torque sensor 23, and the steering sensor 24 are installed in such a positional relationship that the operation of the steering actuator 26 has an influence on the detection values of the torque sensor 23 and the steering sensor 24 (see Fig. 2 (A)). For example, in the example illustrated in Fig. 2 (A), the steering actuator 26 is installed to act on the steering shaft 92 (or a shaft that substantially rotates together with the steering shaft 92), and the torque sensor 23 and steering sensor 24 are provided for the steering shaft 92 on which the steering actuator 26 acts. In such a configuration, the steering torque detected by the torque sensor 23 substantially corresponds to a total of a torque (i.e., a driver operation torque) generated by the driver operating the input rotary shaft 90 and an operation torque (nearly equal to an instruction torque) generated by the steering actuator 26.

The LKA ECU 20 is coupled to a forward camera 32, a LKA switch 34, etc.

The forward camera 32 may be a single camera or a stereo camera that captures a scene around the vehicle that mainly includes a predetermined region in front of the vehicle. Photoelectric conversion elements of the forward camera 32 may be CCDs (charge-coupled devices), CMOSs (complementary metal oxide semiconductors), etc.

The LKA switch 34 is to be operated by a user. The main switch 34 may be provided at any location in a cabin. The LKA switch 34 may be a mechanical switch or a touch switch. The LKA switch 34 is an interface for the user to input his/her intention whether to perform a lane keeping assist control described hereinafter. As an example, it is assumed hereinafter that the LKA switch 34 is turned on when the user expresses his/her intention to perform the lane keeping assist control. It is noted that a display for indicating an ON/OFF status of the LKA switch 34 (i.e., an ON/OFF status of the lane keeping assist control) may be output in a meter (not illustrated).

The LKA ECU 20 may recognize a lane boundary sign from the image data of the forward camera 32 to generate road information. The lane boundary sign represents a road surface sign for delimiting (defining) a traveling lane. For example, the lane boundary sign is a line-shaped sign formed by applying paint which can be recognized from a road surface, such as white paint, in line shape along the road. Further, there is a line formed in a chromatic color such as yellow or orange, depending on a road rule or a nation. Further, the lane boundary sign includes, in addition to a line-shaped sign, a dotted line or a broken line which has portions in which paint is not applied at a predetermined interval. Further, when the traveling lane is delimited by a three-dimensional object such as a bots dots such as in United State of America, instead of the paint, such a three-dimensional object is also included in the lane boundary sign. Further, when the traveling lane is delimited by arranging light emitting objects such as lamps or cat's eyes along the road, these objects are also included in the lane boundary sign.

The LKA ECU 20 performs, in cooperation with the EPS ECU 22, the lane keeping assist control based on the road information. The lane keeping assist control may include an alert control via an information output device such as a buzzer or the meter, and an intervention control for changing an orientation of the vehicle via the steering actuator 26. Alternatively, the lane keeping assist control may include the intervention control. It is noted that it is assumed that the intervention control is a LKA (Lane Keeping Assist) that supports a driver's steering operation such that the vehicle travels to stay in the traveling lane; however, the intervention control may be a LDW (Lane Departure Warning) that is operated when the departure from the traveling lane is detected or the like. According to the LKA, the steering torque is constantly assisted according to the lateral displacement with respect to the target traveling line (traveling lane center), the yaw angle, etc., and, when the departure tendency is detected, the steering assist demand torque for the departure reduction may be calculated. According to the LDW, when the departure tendency is detected, the steering assist demand torque for the departure reduction may be calculated. It is noted that at the time of performing the intervention control the steering torque and a yaw moment with a brake actuator (not illustrated) may be generated or only the steering torque may be generated.

The idling stop ECU 10 is coupled to the engine ECU 40, a brake ECU 50, and a meter ECU 52. The brake ECU 50 may supply the idling stop ECU 10 with brake operation information by the driver, vehicle speed information, etc. The meter ECU 52 may output on/off states of the LKA switch 34 and an idling stop cancel switch 70, alarms, etc. in the meter, according to instructions from the idling stop ECU 10.

The idling stop ECU 10 is coupled to a starter 42. The starter 42 starts the engine under control by the idling stop ECU 10.

The idling stop ECU 10 is coupled to the idling stop cancel switch 70. The idling stop cancel switch 70 is to be operated by the user. The idling stop cancel switch 70 may be provided at any location in the cabin. The idling stop cancel switch 70 may be a mechanical switch or a touch switch. The idling stop cancel switch 70 is an interface for the user to input his/her intention whether to perform an idling stop control. Here, as an example, the idling stop cancel switch 70 is turned on when the user does not desire the idling stop control.

The idling stop ECU 10 may have various items of vehicle information (signals) input from other ECUs, sensors, etc., if necessary. The various items of vehicle information may include a signal representing a state (current, voltage) of a battery, a signal related to a comfort degree of an air conditioner (a room temperature, etc., for example), a signal representing a brake booster pressure value, an air bag signal, a food lock close signal, a door close signal, a seat belt buckle signal, etc., for example.

Fig. 3 is a flowchart illustrating an example of a process executed by the LKA ECU 20. The process illustrated in Fig. 3 may be performed at a predetermined cycle during an ON state of an ignition switch (not illustrated), for example.

In step S304, it is determined whether the LKA switch 34 is in its ON state. When it is determined that the LKA switch 34 is in its ON state, the process routine goes to step S302, otherwise the process routine directly ends to start from step S300 at the next process cycle.

In step 302, it is determined whether a lane keeping assist control operation condition is met. The lane keeping assist control operation condition is arbitrary. Here, as an example, the lane keeping assist control operation condition does not include a condition related to the vehicle speed. In other words, the lane keeping assist control is performed over a whole vehicle speed range. The lane keeping assist control operation condition may include the steering torque by the steering operation of the driver being not greater than or equal to a predetermined value Th1, the lane boundary sign being detected (recognized) by the forward camera 32, a state of a wiper apparatus being not a "Hi" state, systems (the LKA ECU 20, the forward camera 32, etc.) being normal, etc. When it is determined that the lane keeping assist control operation condition is met, the process routine goes to step S304, otherwise the process routine directly ends to start from step S300 at the next process cycle.

In step S304, the operation of the lane keeping assist control is started.

In step 306, it is determined whether the lane keeping assist control operation condition is met. The lane keeping assist control operation condition may be the same as described above in relation to step S302. Alternatively, an element "the steering torque by the steering operation of the driver being not greater than or equal to a predetermined value Th1" may be omitted in step S302, but may be included only in step S306. If it is determined that the lane keeping assist control operation condition is met, the process routine goes to step 310, otherwise the process routine goes to step 308.

In step S308, the lane keeping assist control is interrupted. In this case, the process routine starts from step S306 at the next process cycle.

In step S310, the lane keeping assist control is continued. It is noted that in a situation where the lane keeping assist control has been interrupted, the lane keeping assist control is restored to the operation state (i.e., the operation of the lane keeping assist control is restarted). It is noted that, even in the operation of the lane keeping assist control, there may be a case where the steering actuator 26 does not generate the steering torque when the departure tendency is not detected, as described above. In other words, "in operation of the lane keeping assist control" is not equal to "in operation of the steering actuator 26". When the process in step S310 is terminated, the process routine goes to step 312.

In step S312, it is determined whether the LKA switch 34 is in its OFF state or the system (the LKA ECU 20, the forward camera 32, etc.) is abnormal. When it is determined that any one of the conditions is met, the process routine goes to step S314, otherwise the process routine directly ends to start from step S310 at the next process cycle. It is noted that when it is determined that none of the conditions is met, the process routine may directly end to start from step S306 at the next process cycle.

In step S314, the lane keeping assist control is terminated.

It is noted that, in the process illustrated in Fig. 3, in step S308, the LKA switch 34 may be turned off (automatically). In this case, in step S306, the LKA switch 34 is turned on and it is determined whether the lane keeping assist control operation condition is met. In such a configuration, restarting the lane keeping assist control requires the LKA switch 34 to be turned on by the user again.

Fig. 4 is a flowchart illustrating an example of a process executed by the idling stop ECU 10. The process illustrated in Fig. 4 may be performed at a predetermined cycle during the ON state of an ignition switch and the OFF state of the idling stop cancel switch 70.

In step S400, it is determined, based on the vehicle speed information, whether the vehicle has stopped after traveling at the vehicle speed greater than a predetermined vehicle speed V1. The predetermined vehicle speed V1 is arbitrary, and may be 0 for example.

In step S402, it is determined whether the LKA switch 34 is in its ON state. Instead of determining whether the LKA switch 34 is in its ON state, it may be determined whether the lane keeping assist control is being operated (i.e., the process of step S310 in Fig. 3 is being performed). If it is determined that the LKA switch 34 is in its ON state, the process routine goes to step 406, otherwise the process routine goes to step 404.

In step S404, it is determined, based on the latest information from the EPS ECU 22, whether any one of the steering torque, the steering angle, and the steering angular velocity is less than or equal to corresponding first idling stop start thresholds (α1, α2, α3). The first idling stop start thresholds are prepared for three parameters including the steering torque, the steering angle, and the steering angular velocity, respectively. In the example, the first idling stop start threshold related to the steering torque is α1, the first idling stop start threshold related to the steering angle is α2, and the first idling stop start threshold related to the steering angular velocity is α3. The first idling stop start thresholds α1, α2, α3 may be set according to lower limit values of ranges in which the parameters could take at the time of the steering operation, in the vehicle stopped state, by the driver who intends to start to accelerate the vehicle immediately after the vehicle stop event, respectively. Specifically, performing the idling stop control, in the case where the vehicle is started to travel immediately after the vehicle stop event, causes the fuel economy to be reduced on the contrary. In scenes where the vehicle is started to travel immediately after the vehicle stop event, the drivers may stop the vehicle while performing the steering operation or perform the steering operation even in the vehicle stopped state. Thus, in such a short stop can be predicted on the parameters, it is better not to start the idling stop control. The first idling stop start thresholds α1, α2, α3 may be determined from such a viewpoint. The first idling stop start thresholds α1, α2, α3 may be adapted based on experimental data, etc. Any one of the steering torque, the steering angle, and the steering angular velocity is less than or equal to the corresponding first idling stop start threshold, the process routine goes to step S408, otherwise the process routine directly ends to start from step S400 at the next process cycle.

It is noted that, in step S404, it may be determined whether any two of the steering torque, the steering angle, and the steering angular velocity are less than or equal to the corresponding first idling stop start thresholds, or it may be determined whether all the steering torque, the steering angle, and the steering angular velocity are less than or equal to the corresponding first idling stop start thresholds.

In step S406, it is determined, based on the latest information from the EPS ECU 22, whether any one of the steering torque, the steering angle, and the steering angular velocity is less than or equal to corresponding second idling stop start thresholds ((β1, β2, β3). The second idling stop start thresholds are prepared for three parameters including the steering torque, the steering angle, and the steering angular velocity, respectively. In the example, the second idling stop start threshold related to the steering torque is β1, the second idling stop start threshold related to the steering angle is β2, and the second idling stop start threshold related to the steering angular velocity is β3. The second idling stop start thresholds β1, β2, β3 are substantially greater than the first idling stop start thresholds α1, α2, α3, respectively. With this arrangement, it becomes possible to reduce a probability that the idling stop control, which otherwise could be performed appropriately, is prevented due to the lane keeping assist control.

In step S406, if it is determined that any one of the steering torque, the steering angle, and the steering angular velocity is less than or equal to the corresponding second idling stop start threshold, the process routine goes to step S408. Otherwise, the process routine directly ends to start from step S402 at the next process cycle. Thus, in this case, there is a probability that the determination result in step S406 at the next process cycle becomes affirmative. In this way, during a period in which the determination result in step S402 is affirmative, the determination of step S406 is performed repeatedly. With this arrangement, it becomes possible to reduce a probability that the idling stop control, which otherwise could be performed appropriately, is prevented due to the lane keeping assist control. Such repeated determinations in step S406 is in contrast with the determination in step S404 that is performed only once for a single vehicle stop event (i.e., the affirmative determination event in step S400). This is because, with respect to the determination in step S404, only one negative determination result suffices to confirm the intention of the driver to start to drive the vehicle immediately after the vehicle stop event. However, the determination in step S404 may also be performed repeatedly for a single vehicle stop event, as is the case with the determination in step S406. It is noted that the determination in step S406 may be repeated endlessly for a single vehicle stop event during the period in which the determination result in step S402 is affirmative; however, the determination in step S406 may be repeated at predetermined times (or for a predetermined time).

In step S408, the idling stop control is started on the premise that other start conditions (i.e., predetermined conditions other than the start condition related to the steering described above) are met. Specifically, the engine is stopped. Other start conditions may be related to the state of the battery, the brake operation state, the air conditioner state, etc.

In step S410, it is determined, based on the latest information from the EPS ECU 22, whether there is some change in any one of the steering torque, the steering angle, and the steering angular velocity. If it is determined that there is some change in any one of the steering torque, the steering angle, and the steering angular velocity, the process routine goes to step S412. Otherwise, the process routine directly ends to start from step S410 at the next process cycle. However, even if the determination result in step S410 is negative, the process routine may go to step S418 when another start condition (i.e., a predetermined start condition other than the start condition related to the steering described hereinafter) is met. Another start condition may be related to the state of the battery, the brake operation state, the air conditioner state, the vehicle speed, etc.

It is noted that the determination process of step 410 may be omitted. In this case, the process routine directly goes to step S412 after the process of step 408.

In step S412, it is determined whether the LKA switch 34 is in its ON state. Instead of determining whether the LKA switch 34 is in its ON state, it may be determined whether the lane keeping assist control is being operated (i.e., the process of step S310 in Fig. 3 is being performed). If it is determined that the LKA switch 34 is in its ON state, the process routine goes to step 416, otherwise the process routine goes to step 414.

In step S414, it is determined, based on the latest information from the EPS ECU 22, whether any one of the steering torque, the steering angle, and the steering angular velocity exceeds corresponding first idling stop end thresholds (γ1, γ2, γ3). The first idling stop end thresholds are prepared for three parameters including the steering torque, the steering angle, and the steering angular velocity, respectively. In the example, the first idling stop end threshold related to the steering torque is γ1, the first idling stop end threshold related to the steering angle is γ2, and the first idling stop end threshold related to the steering angular velocity is γ3. The second idling stop start thresholds γ1, γ2, γ3 are greater than the first idling stop start thresholds α1, α2, α3, respectively. The first idling stop end thresholds γ1, γ2, γ3 may be set according to lower limit values of ranges in which the parameters could take at the time of the steering operation, in the vehicle stopped state, by the driver who intends to start to accelerate the vehicle, respectively. Specifically, the driver who intends to start to accelerate the vehicle may perform the steering operation prior to the release operation of the brake pedal, etc. Thus, in such a driver's intention to start to drive the vehicle can be predicted on the parameters, it is better not to end the idling stop control. The first idling stop end thresholds γ1, γ2, γ3 may be determined from such a viewpoint. The first idling stop end thresholds γ1, γ2, γ3 may be adapted based on experimental data, etc.

In step S414, if it is determined that any one of the steering torque, the steering angle, and the steering angular velocity exceeds the corresponding first idling stop end threshold, the process routine goes to step S418. Otherwise, the process routine directly ends to start from step S412 at the next process cycle. Alternatively, otherwise, the process routine may directly end to start from step S410 at the next process cycle.

It is noted that, similarly, in step S414, it may be determined whether any two of the steering torque, the steering angle, and the steering angular velocity exceed the corresponding first idling stop end thresholds, or it may be determined whether all the steering torque, the steering angle, and the steering angular velocity exceed the corresponding first idling stop end thresholds.

In step S416, it is determined, based on the latest information from the EPS ECU 22, whether any one of the steering torque, the steering angle, and the steering angular velocity exceeds corresponding second idling stop end thresholds (η1, η2, η3). The second idling stop end thresholds are prepared for three parameters including the steering torque, the steering angle, and the steering angular velocity, respectively. In the example, the second idling stop end threshold related to the steering torque is η1, the second idling stop end threshold related to the steering angle is η2, and the second idling stop end threshold related to the steering angular velocity is η3. The second idling stop end thresholds η1, η2, η3 are greater than the second idling stop start thresholds β1, β2, β3, respectively. Further, the second idling stop end thresholds η1, η2, η3 are substantially greater than the first idling stop end thresholds γ1, γ2, γ3, respectively. With this arrangement, it becomes possible to reduce a probability that the idling stop control, which otherwise could be continued appropriately, is ended due to the lane keeping assist control.

In step S416, if it is determined that any one of the steering torque, the steering angle, and the steering angular velocity exceeds the corresponding second idling stop end threshold, the process routine goes to step S418. Otherwise, the process routine directly ends to start from step S412 at the next process cycle. Alternatively, otherwise, the process routine may directly end to start from step S410 at the next process cycle. It is noted that, during a period in which the determination result in step S416 (the same holds true for step S414) is repeatedly negative, the process routine may go to step S418 when another start condition (i.e., the predetermined start condition other than the start condition related to the steering) is met.

In step 418, the engine is restarted. Specifically, the idling stop control is ended. It is noted that restarting the engine may be permitted on the premise that another start condition (i.e., the predetermined start condition other than the start condition related to the steering) is also met. Alternatively, the start condition related to the steering described above may be used solely as one of OR conditions to be met to restart the engine.

According to the process illustrated in Fig. 4, if the LKA switch 34 is in its ON state (or the lane keeping assist control is being operated), whether to start the idling stop control is determined based on the second idling stop start thresholds β1, β2, β3. Otherwise, whether to start the idling stop control is determined based on the first idling stop start thresholds α1, α2, α3. The second idling stop start thresholds β1, β2, β3 are substantially greater than the first idling stop start thresholds α1, α2, α3, respectively, as described above. Thus, the idling stop control is easier to be started in a case where the LKA switch 34 is in its ON state (or the lane keeping assist control is being operated) than the idling stop control is in another case. With this arrangement, it becomes possible to reduce a probability that the idling stop control, which otherwise could be performed appropriately, is prevented due to the lane keeping assist control.

Specifically, the first idling stop start thresholds α1, α2, α3 are set from a viewpoint of detecting the driver's intention to start to drive the vehicle, as described above. However, the lane keeping assist control is performed, regardless of the presence or absence of the driver's intention to start to drive the vehicle. When the steering actuator 26 is operated due to the lane keeping assist control at the time of the vehicle stop event after the traveling of the vehicle, there may be a case where the steering torque, the steering angle, and/or the steering angular velocity exceed the first idling stop start thresholds α1, α2, and/or α3 at that time. In such a case, the idling stop control is not started (i.e. the idling stop control is prevented) even without the driver's intention to start to drive the vehicle, which causes the driver to feel strange. For example, such a message "idling stop control cannot be performed due to steering wheel operation" is displayed, the driver who does not perform the steering operation may feel strange. Further, the idling stop control, which otherwise could be performed, is not performed, which is not preferable in terms of the fuel economy. In contrast, according to the embodiment, as described above, when the LKA switch 34 is in its ON state (or the lane keeping assist control is being operated), whether to start the idling stop control is determined based on the second idling stop start thresholds β1, β2, β3. Thus, it becomes possible to cause the idling stop control to be started easily even when the steering actuator 26 is operated due to the lane keeping assist control at the vehicle stop event after traveling of the vehicle. With this arrangement, it become possible to reduce the probability that the driver feels strange, and improve the fuel economy due to the idling stop control without reducing convenience of the lane keeping assist control.

Further, according to the process illustrated in Fig. 4, when the LKA switch 34 is in its ON state (or the lane keeping assist control is being operated), whether to end the idling stop control is determined based on the second idling stop end thresholds η1, η2, η3. Otherwise, whether to end the idling stop control is determined based on the first idling stop end thresholds γ1, γ2, γ3. As described above, the second idling stop end thresholds η1, η2, η3 are substantially greater than the first idling stop end thresholds γ1, γ2, γ3, respectively. Thus, the idling stop control is more difficult to be ended in a case where the LKA switch 34 is in its ON state (or the lane keeping assist control is being operated) than the idling stop control is in another case. With this arrangement, it becomes possible to reduce a probability that the idling stop control, which otherwise could be continued appropriately, is ended earlier due to the lane keeping assist control.

Specifically, the first idling stop end thresholds γ1, γ2, γ3 are set from a viewpoint of detecting the driver's intention to start to drive the vehicle, as described above. However, the lane keeping assist control is performed, regardless of the presence or absence of the driver's intention to start to drive the vehicle. When the steering actuator 26 is operated due to the lane keeping assist control in the vehicle stopped state, there may be a case where the steering torque, the steering angle, and/or the steering angular velocity exceed the first idling stop end thresholds γ1, γ2, and/or γ3 at that time. In such a case, the idling stop control is not ended even without the driver's intention to start to drive the vehicle, which causes the driver to feel strange. Further, the idling stop control, which otherwise could be continued, is not continued (i.e., ended earlier), which is not preferable in terms of the fuel economy. In contrast, according to the embodiment, as described above, when the LKA switch 34 is in its ON state (or the lane keeping assist control is being operated), whether to end the idling stop control is determined based on the second idling stop end thresholds η1, η2, η3. Thus, it becomes possible to make it more difficult to end the idling stop control even when the steering actuator 26 is operated due to the lane keeping assist control in the vehicle stopped state. With this arrangement, it become possible to reduce the probability that the driver feels strange, and improve the fuel economy due to the idling stop control without reducing convenience of the lane keeping assist control.

It is noted that, in the example illustrated in Fig. 4, as a preferred embodiment, whether the LKA switch 34 is in its ON state (or the lane keeping assist control is being operated) is considered with respect to both of the start condition and the end condition for the idling stop control; however, it may be considered with respect to only one of them. For example, if whether the LKA switch 34 is in its ON state (or the lane keeping assist control is being operated) is considered with respect to only the start condition for the idling stop control, processes in step S412 and step S416 in Fig. 4 may be omitted.

Further, in the example illustrated in Fig. 4, in step S400, whether the vehicle has stopped after traveling with the vehicle speed greater than the predetermined vehicle speed V1; however, whether the vehicle speed is less than or equal to a predetermined vehicle speed V2 may be determined instead. In other words, a configuration in which the idling stop control is performed even in a low vehicle speed range other than in the vehicle stopped state may be implemented. The predetermined vehicle speed V2 is greater than 0, and corresponds to a lower limit vehicle speed in a range in which the idling stop control can be performed. In this case, when it is determined that the vehicle speed is less than or equal to the predetermined vehicle speed V2, the process routine goes to step S402, otherwise the process routine directly ends to start from step S400 at the next process cycle. Further, from the same viewpoint, in step S400, it may be determined whether the vehicle is in a decelerated state and the vehicle speed is less than or equal to the predetermined vehicle speed V2.

Further, in the example illustrated in Fig. 4, in step S400, whether the vehicle has stopped after traveling with the vehicle speed greater than the predetermined vehicle speed V1; however, whether the vehicle is in the stopped state may be determined instead. In this case, when the vehicle is still in the stopped state even after the end of the idling stop control (i.e., after the engine restart), for example, the determination result in step S400 is affirmative. In this case, if the start condition is met again, the idling stop control can be started. For example, the idling stop control is ended due to the air conditioner state (i.e., the reduction in the comfort degree of the air conditioner), the battery state (i.e., the reduction in the state of charge), etc., to restart the engine. Then, the vehicle is still in the stopped state, and if the comfort degree due to the air conditioner is improved and the state of charge of the battery is increased due to the engine restart, the idling stop control can be started.

Fig. 5 is a flowchart illustrating another example of a process executed by the idling stop ECU 10. The process illustrated in Fig. 5 may be performed at a predetermined cycle during the ON state of an ignition switch and the OFF state of the idling stop cancel switch 70.

The process routine illustrated in Fig. 5 differs from the process routine illustrated in Fig. 4 in that a process of step S503 is added. The processes in step S500, step S502, step S504 through step S518 may be the same as those in step S400, step S402, step S404 through step S418 illustrated in Fig. 4, respectively.

If the determination result in step S502 is affirmative, the process goes to step S503. In step S503, it is determined, based on the latest information from the EPS ECU 22, whether the steering torque (i.e., the driver steering torque) due to the steering operation by the driver is greater than or equal to a predetermined value Th2. When the steering actuator 26 is in non-operated state, the steering torque itself detected by the torque sensor 23 may be used as the steering torque due to the steering operation by the driver. On the other hand, when the steering actuator 26 is in the operated state, the steering torque due to the steering operation by the driver may be derived by subtracting the steering torque (i.e., the instruction torque) due to the operation of the steering actuator 26 from the steering torque detected by the torque sensor 23. The steering torque due to the operation of the steering actuator 26 may be calculated based on a current (or control values such as an instruction torque, etc.) applied to the steering actuator 26. The predetermined value Th2 is used to detect the steering operation of the driver, and thus may be relatively small. The predetermined value Th2 is smaller than the predetermined value Th1 which may be included in "the steering operation of the driver being not greater than or equal to the predetermined value Th1" of the lane keeping assist control operation condition. If it is determined that the steering torque due to the steering operation by the driver is greater than or equal to the predetermined value Th2, the process goes to step 504, otherwise the process goes to step 506.

According to the process illustrated in Fig. 5, the same effects as the process illustrated in Fig. 4 can be obtained. Further, according to the process illustrated in Fig. 5, the idling stop start threshold is changed according to whether the steering torque due to the steering operation by the driver is greater than or equal to the predetermined value Th2. With this arrangement, it is possible to precisely reduce the probability that the idling stop control, which is better to not be started, is started.

Specifically, as described above, even if the LKA switch 34 is in its ON state (or the lane keeping assist control is being operated), there may be a case where the steering actuator 26 does not generate the steering torque when the departure tendency is not detected. In other words, "in operation of the lane keeping assist control" is not equal to "in operation of the steering actuator 26". Thus, according to the process illustrated in Fig. 4, the idling stop control may be started when the steering torque, the steering angle, and/or the steering angular velocity that exceed the first idling stop start thresholds α1, α2, and/or α3 but are less than or equal to the second idling stop start thresholds β1, β2, and/or β3 due to the steering operation by the driver in the situation where the LKA switch 34 is in its ON state (or the lane keeping assist control is being operated). In contrast, according to the process illustrated in Fig. 5, even such a case, the idling stop control is not started when the steering torque due to the steering operation by the driver is greater than or equal to the predetermined value Th2. With this arrangement, it is possible to precisely reduce the probability that the idling stop control, which is better not to be started, is started.

It is noted that, in the example illustrated in Fig. 5, in step S503, it is determined whether the steering torque due to the steering operation by the driver is greater than or equal to the predetermined value Th2; however, it may be determined whether a change amount of the steering angle or the steering angular velocity due to the steering operation by the driver is greater than or equal to a predetermined value, instead of or in addition to the steering torque due to the steering operation by the driver is greater than or equal to the predetermined value Th2.

Fig. 6 is a flowchart illustrating yet another example of a process executed by the idling stop ECU 10. The process illustrated in Fig. 6 may be performed at a predetermined cycle during the ON state of an ignition switch and the OFF state of the idling stop cancel switch 70.

The process routine illustrated in Fig. 6 differs from the process routine illustrated in Fig. 5 in that a process of step S513 is added.

If the determination result in step S512 is affirmative, the process goes to step S513. In step S503, it is determined, based on the latest information from the EPS ECU 22, whether the steering torque due to the steering operation by the driver is greater than or equal to a predetermined value Th3. A way of obtaining the steering torque due to the steering operation by the driver may be as described above. The predetermined value Th3 is used to detect the steering operation of the driver, and thus may be relatively small. However, preferably, the predetermined value Th3 is set such that the predetermined value Th3 is greater than the predetermined value Th2. However, the predetermined value Th3 may be smaller than the predetermined value Th1 which may be included in "the steering operation of the driver being not greater than or equal to the predetermined value Th1" of the lane keeping assist control operation condition. If it is determined that the steering torque due to the steering operation by the driver is greater than or equal to the predetermined value Th3, the process goes to step 514, otherwise the process goes to step 516.

According to the process illustrated in Fig. 6, the same effects as the process illustrated in Fig. 5 can be obtained. Further, according to the process illustrated in Fig. 6, the idling stop end threshold is changed according to whether the steering torque due to the steering operation by the driver is greater than or equal to the predetermined value Th3. With this arrangement, it is possible to precisely reduce the probability that the idling stop control, which is better to be ended, is not ended.

Specifically, as described above, even if the LKA switch 34 is in its ON state (or the lane keeping assist control is being operated), there may be a case where the steering actuator 26 does not generate the steering torque when the departure tendency is not detected. Thus, according to the process illustrated in Fig. 5, the idling stop control may not be ended when the steering torque, the steering angle, and/or the steering angular velocity that exceed the first idling stop end thresholds γ1, γ2, and/or γ3 but are less than or equal to the second idling stop end thresholds η1, η2, and/or η3 due to the steering operation by the driver in the engine stopped state in the situation where the LKA switch 34 is in its ON state (or the lane keeping assist control is being operated). In contrast, according to the process illustrated in Fig. 6, even such a case, the idling stop control is ended when the steering torque due to the steering operation by the driver is greater than or equal to the predetermined value Th3. With this arrangement, it is possible to precisely reduce the probability that the idling stop control, which is better to be ended, is not ended.

It is noted that, in the example illustrated in Fig. 6, the process of step S513 is added with respect to the process routine illustrated in Fig. 5; however, in the example illustrated in Fig. 6, the process of step S513 may be added and the process of step S503 may be omitted.

Fig. 7 is a diagram illustrating an example of a relationship between the thresholds, etc., used in the example illustrated in Fig. 6 (or Fig. 5). In Fig. 7, as an example, the relationship between the thresholds, etc., related to the steering torque is illustrated. This may hold true for the steering angle and/or the steering angular velocity.

In the example illustrated in Fig. 7, the first idling stop start threshold α1, the second idling stop start threshold β1, the first idling stop end threshold γ1, and the second idling stop end threshold η1 have a relationship of "η1>γ1>β1>α1". Further, the relationship including the predetermined values Th1, Th2, and Th3 is Th1>η1>Th3>γ1>β1>Th2>α1. In this case, in the example illustrated in Fig. 6, for example, when the determination result in step S503 is affirmative, the determination result in step S504 automatically becomes negative. Thus, in this case, in the example illustrated in Fig. 6, when the determination result in step S503 is affirmative, the process routine at this cycle may directly end to start from step S500 at the next process cycle. Similarly, in this case, in the example illustrated in Fig. 6, for example, when the determination result in step S513 is affirmative, the determination result in step S514 automatically becomes affirmative. Thus, in this case, in the example illustrated in Fig. 6, when the determination result in step S513 is affirmative, the process routine may go to step S518.

It is noted that the example illustrated in Fig. 7 is just an example, and other relationships may be used. For example, such a relationship Th1>η1>γ1>Th3>β1>α1>Th2 may be used.

Fig. 8 is a flowchart illustrating yet another example of a process executed by the idling stop ECU 10. The process illustrated in Fig. 8 may be performed at a predetermined cycle during the ON state of an ignition switch and the OFF state of the idling stop cancel switch 70.

The process routine illustrated in Fig. 8 differs from the process routine illustrated in Fig. 5 in that a process of step S506 is omitted. Specifically, according to the process routine illustrated in Fig. 8, when the LKA switch 34 is in its ON state (or the lane keeping assist control is being operated), and the steering torque due to the steering operation by the driver is not greater than or equal to the predetermined value Th2, the idling stop control is started, regardless of the values of the steering torque, the steering angle, and/or the steering angular velocity. With this arrangement, it becomes possible to reduce a probability that the idling stop control, which otherwise could be performed appropriately, is prevented due to the lane keeping assist control. It is noted that the process routine illustrated in Fig. 8 is substantially equivalent to a configuration in which the second idling stop start thresholds β1, β2, β3 in the process routine illustrated in Fig. 5 are changed to very great values.

It is noted that, in the example illustrated in Fig. 8, the process of step S506 is omitted with respect to the start condition of the idling stop control; however, instead of or in addition to this, the same idea may be applied with respect to the end condition of the idling stop control. Specifically, the process of step S516 is omitted, and if the determination result of step S512 is affirmative, the same determination process as that in step S513 (see Fig. 6) may be performed. As the result of the same determination process as that in step S513, if the determination result is affirmative, the process routine may go to step S514, otherwise the process routine at this cycle may directly end to start from step S512 at the next process cycle. In this case, when the LKA switch 34 is in its ON state (or the lane keeping assist control is being operated), and the steering torque due to the steering operation by the driver is not greater than or equal to the predetermined value Th3, the idling stop control is not ended, regardless of the values of the steering torque, the steering angle, and/or the steering angular velocity. It is noted that, even in this case, the idling stop control may be ended when another start condition (i.e., the predetermined start condition other than the start condition related to the steering described above) is met.

Fig. 9 is a flowchart illustrating yet another example of a process executed by the idling stop ECU 10. The process illustrated in Fig. 9 may be performed at a predetermined cycle during the ON state of the ignition switch and the OFF state of the idling stop cancel switch 70.

The process routine illustrated in Fig. 9 differs from the process routine illustrated in Fig. 5 in that the process of step S503 is replaced with a process of step S903. The processes in step S900, step S902, step S904 through step S918 may be the same as those in step S500, step S502, step S504 through step S518 illustrated in Fig. 5, respectively.

In step S903, it is determined whether the steering actuator 26 is being operated. Whether the steering actuator 26 is being operated may be determined based on whether a current (or the control value) applied to the steering actuator 26 is greater than a predetermined value. The predetermined value is arbitrary, and may be 0. If it is determined that the steering actuator 26 is being operated, the process routine goes to step 906, otherwise the process routine goes to step 904.

According to the process illustrated in Fig. 9, the same effects as the process illustrated in Fig. 4 can be obtained. Further, according to the process illustrated in Fig. 9, the idling stop start threshold is changed according to whether the steering actuator 26 is being operated. With this arrangement, it is possible to precisely reduce the probability that the idling stop control, which is better not to be started, is started.

Specifically, as described above, even if the LKA switch 34 is in its ON state (or the lane keeping assist control is being operated), there may be a case where the steering actuator 26 does not generate the steering torque when the departure tendency is not detected. Thus, according to the process illustrated in Fig. 4, the idling stop control may be started when the steering torque, the steering angle, and/or the steering angular velocity that exceed the first idling stop start thresholds α1, α2, and/or α3 but are less than or equal to the second idling stop start thresholds β1, β2, and/or β3 due to the steering operation by the driver in the situation where the LKA switch 34 is in its ON state (or the lane keeping assist control is being operated). In contrast, according to the process illustrated in Fig. 9, even in such a case, the idling stop control is not started when the steering actuator 26 is not being operated. With this arrangement, it is possible to precisely reduce the probability that the idling stop control, which is better not to be started, is started.

It is noted that, in the example illustrated in Fig. 9, in step S903, it may be determined whether the steering actuator 26 is being operated and the steering torque due to the steering operation by the driver is greater than or equal to a predetermined value Th4. Alternatively, it may be determined whether the steering torque of the steering actuator 26 is greater than the steering torque due to the steering operation by the driver.

Further, in the example illustrated in Fig. 9, the process of step S903 is performed with respect to the start condition of the idling stop control; however, instead of or in addition to this, the same process as that in step S903 may be performed with respect to the end condition of the idling stop control. In this case, if the determination result of step S912 is affirmative, the same determination process as that in step S903 may be performed, and as a result of this, if the determination result is affirmative, the process routine may go to step S916, otherwise the process routine may go to step S914.

Fig. 10 is a flowchart illustrating yet another example of a process executed by the idling stop ECU 10. The process illustrated in Fig. 10 may be performed at a predetermined cycle during the ON state of the ignition switch and the OFF state of the idling stop cancel switch 70.

The process routine illustrated in Fig. 10 differs from the process routine illustrated in Fig. 9 in that a process of step S906 is omitted. Specifically, according to the process routine illustrated in Fig. 10, when the LKA switch 34 is in its ON state (or the lane keeping assist control is being operated), and the steering actuator 26 is being operated, the idling stop control is started, regardless of the values of the steering torque, the steering angle, and/or the steering angular velocity. With this arrangement, it becomes possible to reduce a probability that the idling stop control, which otherwise could be performed appropriately, is prevented due to the lane keeping assist control. It is noted that the process routine illustrated in Fig. 10 is substantially equivalent to a configuration in which the second idling stop start thresholds β1, β2, β3 in the process routine illustrated in Fig. 9 are changed to very great values.

It is noted that, in the example illustrated in Fig. 10, the process of step S906 is omitted with respect to the start condition of the idling stop control; however, instead of or in addition to this, the same idea may be applied with respect to the end condition of the idling stop control. Specifically, the process of step S916 is omitted, and if the determination result of step S912 is affirmative, the same determination process as that in step S903 may be performed. As the result of the same determination process as that in step S903, if the determination result is negative, the process routine may go to step S914, otherwise the process routine at this cycle may directly end to start from step S912 at the next process cycle. In this case, when the LKA switch 34 is in its ON state (or the lane keeping assist control is being operated), and the steering actuator 26 is being operated, the idling stop control is not ended, regardless of the values of the steering torque, the steering angle, and/or the steering angular velocity. It is noted that, even in this case, the idling stop control may be ended when another start condition (i.e., the predetermined start condition other than the start condition related to the steering described above) is met.

Here, according to the embodiments described above, the engine is made easier to be started or more difficult to be restarted by changing the idling stop start threshold and/or the idling stop end threshold between the case where the LKA switch 34 is in its ON state (or the lane keeping assist control is being operated) and another case; however, substantially the same effect can be obtained by calculating/detecting the steering torque, the steering angle, and/or the steering angular velocity due to the steering operation by the driver (see Fig. 11, for example).

Fig. 11 is a flowchart illustrating yet another example of a process executed by the idling stop ECU 10. The process illustrated in Fig. 11 may be performed at a predetermined cycle during the ON state of the ignition switch and the OFF state of the idling stop cancel switch 70.

In Fig. 11, the processes in step S1100, step S1108, and step S1118 may be the same as those in step S400, step S408, and step S418 illustrated in Fig. 4, respectively.

If the determination result in step S1100 is affirmative, the process goes to step S1104. In step S1104, it is determined, based on the latest information from the EPS ECU 22, whether the steering torque due to the steering operation by the driver is less than or equal to a predetermined idling stop start threshold. A way of calculating the steering torque due to the steering operation by the driver may be as described above. The predetermined idling stop start threshold is the same as the first idling stop start threshold α1 described above. When it is determined that the steering torque due to the steering operation by the driver is less than or equal to the predetermined idling stop start threshold, the process routine goes to step S1108. Otherwise, the process routine directly ends to start from step S1100 at the next process cycle. Alternatively, otherwise, the process routine may directly end to start from step S1104 at the next process cycle. Specifically, the determination of step S1104 may be repeated in the vehicle stopped state.

When the process in step S1108 is terminated, the process routine goes to step 1114. In step S1104, it is determined, based on the latest information from the EPS ECU 22, whether the steering torque due to the steering operation by the driver exceeds a predetermined idling stop end threshold. The predetermined idling stop end threshold is the same as the first idling stop end threshold γ1 described above. When it is determined that the steering torque due to the steering operation by the driver exceeds the predetermined idling stop end threshold, the process routine goes to step S1118. Otherwise, the process routine directly ends to start from step S1114 at the next process cycle. Specifically, the determination of step S1104 is repeated in the vehicle stopped state. However, similarly, the process routine may go to step S1118 during this period, when another start condition (i.e., the predetermined start condition other than the start condition related to the steering) is met.

It is noted that, in the example illustrated in Fig. 11, the steering torque is compared with the predetermined idling stop start and end thresholds; however, instead of or in addition to this, other parameters (the steering angle and/or the steering angular velocity, for example) may be compared with corresponding thresholds. It is noted that, similarly, when the steering actuator 26 is in non-operated state, the steering angle itself detected by the steering sensor 24 may be used as the steering angle due to the steering operation by the driver. On the other hand, when the steering actuator 26 is in the operated state, the steering angle due to the steering operation by the driver may be derived by subtracting the steering angle due to the operation of the steering actuator 26 from the steering angle detected by the steering sensor 24. The steering angle due to the operation of the steering actuator 26 may be calculated based on the current, etc., applied to the steering actuator 26.

Fig. 12 is a flowchart illustrating yet another example of a process executed by the idling stop ECU 10. The process illustrated in Fig. 12 may be performed at a predetermined cycle during the ON state of the ignition switch and the OFF state of the idling stop cancel switch 70.

The process routine illustrated in Fig. 12 differs from the process routine illustrated in Fig. 11 in that processes of step S1106 and step S1116 are added.

When the determination result in step S1104 is negative, the process routine directly ends to start from step S1100 at the next process cycle. If the determination result in step S1104 is affirmative, the process goes to step S1106. In step S1106, it is determined, based on the latest information from the EPS ECU 22, whether the steering torque due to the operation of the steering actuator 26 is less than or equal to a predetermined third idling stop start threshold. The steering torque due to the operation of the steering actuator 26 may be calculated based on a current (or control values such as an instruction torque, etc.) applied to the steering actuator 26. The predetermined third idling stop start threshold may be the same as the second idling stop start threshold β1 described above; however, the predetermined third idling stop start threshold may be smaller than the second idling stop start threshold β1 as long as the predetermined third idling stop start threshold is greater than the first idling stop start threshold α1. When it is determined that the steering torque due to the steering operation of the steering actuator 26 is less than or equal to the predetermined third idling stop start threshold, the process routine goes to step S1108. Otherwise, the process routine directly ends to start from step S1106 at the next process cycle. Specifically, the determination of step S1106 may be repeated in the vehicle stopped state. Alternatively, otherwise, the process routine may directly end to start from step S1100 at the next process cycle.

When the determination result of step S1114 is negative, the process routine goes to step S1116. In step S1116, it is determined, based on the latest information from the EPS ECU 22, whether the steering torque due to the operation of the steering actuator 26 exceeds a predetermined third idling stop end threshold. The predetermined third idling stop end threshold may be the same as the second idling stop end threshold η1 described above; however, the predetermined third idling stop end threshold may be smaller than the second idling stop end threshold η1 as long as the predetermined third idling stop end threshold is greater than the second idling stop start threshold β1. When it is determined that the steering torque due to the steering operation of the steering actuator 26 exceeds the predetermined third idling stop end threshold, the process routine goes to step S1118. Otherwise, the process routine directly ends to start from step S1114 at the next process cycle. Specifically, the determinations of step S1104, etc., are repeated in the vehicle stopped state. However, similarly, the process routine may go to step S1118 during this period, when another start condition (i.e., the predetermined start condition other than the start condition related to the steering) is met.

It is noted that, similarly, in the example illustrated in Fig. 12, the steering torque is compared with the predetermined idling stop start and end thresholds; however, instead of or in addition to this, other parameters (the steering angle and/or the steering angular velocity, for example) may be compared with corresponding thresholds.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present inventions have been described in detail, it should be understood that the various changes, substitutions, and alterations could be made hereto without departing from the spirit and scope of the invention. Further, all or part of the components of the embodiments described above can be combined.

For example, in the embodiments described above, there parameters, that is to say, the steering torque, the steering angle, and the steering angular velocity are used to determine the start condition, etc., related to the steering; however, any two of or only any one of the steering torque, the steering angle, and the steering angular velocity may be used.

Further, in the embodiments described above, the lane keeping assist control is performed over a whole vehicle speed range; however, the lane keeping assist control may be prevented in a part of the vehicle speed range. Even in this case, the embodiments described above may be effective when the vehicle speed range in which the lane keeping assist control can be performed is at least partially overlapped with the vehicle speed range in which the idling stop control can be performed. For example, the idling stop control may be executable when the vehicle speed is less than or equal to the predetermined vehicle speed V2, described above. In this case, it suffices if the lane keeping assist control is executable even when vehicle speed is less than or equal to the predetermined vehicle speed V2.

Further, in the embodiments described above, it is assumed that the steering actuator 26, the torque sensor 23, and the steering sensor 24 are installed in such a positional relationship that the operation of the steering actuator 26 has an influence on the detection values of the torque sensor 23 and the steering sensor 24; however, other configurations may be used. For example, there may be such a configuration (see Fig. 2 (B)) in which the detection values of the torque sensor 23 and the steering sensor 24 do not change even if the steering actuator 26 is operated as long as there is no steering operation of the driver. In this case, in the example illustrated in Fig. 4 (the same holds true for Fig. 5 through Fig. 10), the three parameters, that is to say, the steering torque, the steering angle, and the steering angular velocity used for the determinations in step S406 and step S416 may be calculated (converted) based on the current (or the control value) applied to the steering actuator 26. It is noted that, in the example illustrated in Fig. 2 (B), the steering actuator 26 is provided to act on the rack 94 (act on the rack 94 via a ball screw nut mechanism, for example) and the torque sensor 23 and the steering sensor 24 are provided on the steering shaft 92. According to such a configuration, the steering torque detected by the torque sensor 23 substantially corresponds to the torque (i.e., the driver steering torque) generated the driver operating the steering wheel 90. Thus, in step S503 in Fig. 5 (the same holds true for Fig. 6, etc.), for example, the steering torque itself detected by the torque sensor 23 may be constantly used as the steering torque due to the steering operation by the driver. Similarly, in step S1104 and step S1114 in Fig. 11, the steering torque itself detected by the torque sensor 23 may be constantly used as the steering torque due to the steering operation by the driver.

Further, in the embodiments described above, the lane keeping assist control is performed based on the detection result of the lane boundary sign; however, in addition to or instead of the lane boundary sign, an object that has a predetermined positional relationship with respect to the lane boundary sign, such as a guard rail, a surrounding building, etc., may be detected to perform the lane keeping assist control. In this case, suitable lane keeping assist control may be maintained even in a situation where the lane boundary sign cannot be recognized or the recognition rate of the lane boundary sign is reduced due to rain, snow, dirt, etc.

The present application is based on and claims the benefit of priority of Japanese Priority Application No. 2013-232477, filed on November 8, 2013, the entire contents of which are hereby incorporated by reference.

### [Description of Reference Symbols]

- 1: vehicle control apparatus
- 10: idling stop ECU
- 20: LKA ECU
- 22: EPS ECU
- 23: torque sensor
- 24: steering sensor
- 26: steering actuator
- 32: forward camera
- 34: LKA switch
- 40: engine ECU
- 50: brake ECU
- 70: idling stop cancel switch
- 92: steering shaft
- 94: rack

## Claims

1. A vehicle control apparatus, comprising:
an idling stop control apparatus configured to operate in a situation where a vehicle speed is less than or equal to a predetermined vehicle speed to stop or restart an engine when a predetermined parameter related to steering meets a predetermined condition; and
a lane keeping assist control apparatus configured to operate even in the situation where the vehicle speed is less than or equal to the predetermined vehicle speed to generate a steering force with an actuator according to at least one of a detection result of a lane boundary sign and a detection result of an object having a predetermined positional relationship with respect to the lane boundary sign, wherein
the predetermined condition is set such that the engine is easier to be stopped or more difficult to be restarted in a case where the lane keeping assist control apparatus is in a predetermined operation state than the engine is in a case where the lane keeping assist control apparatus is in another state.

2. The vehicle control apparatus of claim 1, wherein the predetermined condition includes an engine stop condition to be met to stop the engine, the engine stop condition being met upon the predetermined parameter being less than or equal to a predetermined first threshold, and
the predetermined first threshold is set higher in the case where the lane keeping assist control apparatus is in the predetermined operation state than the engine is in a case where the lane keeping assist control apparatus is in another state.

3. The vehicle control apparatus of claim 1 or 2, wherein the predetermined condition includes an engine restart condition to be met to restart the engine, the engine restart condition being met upon the predetermined parameter exceeding a predetermined second threshold, and
the predetermined second threshold is set higher in the case where the lane keeping assist control apparatus is in the predetermined operation state than the engine is in a case where the lane keeping assist control apparatus is in another state.

4. The vehicle control apparatus of any one of claims 1 through 3, wherein the predetermined operation state includes
a state in which a switch to be operated by a user is in a state that permits an operation of the lane keeping assist control apparatus,
a state in which the lane keeping assist control apparatus is in operation,
a state in which the switch to be operated by the user is in the state that permits the operation of the lane keeping assist control apparatus or the lane keeping assist control apparatus is in operation, and a steering torque due to a steering operation by a driver is less than or equal to a predetermined value,
a state in which the switch to be operated by the user is in the state that permits the operation of the lane keeping assist control apparatus or the lane keeping assist control apparatus is in operation, and the steering force is being generated with the actuator,
a state in which the switch to be operated by the user is in the state that permits the operation of the lane keeping assist control apparatus or the lane keeping assist control apparatus is in operation, the steering force is being generated with the actuator, and a steering torque due to a steering operation by the driver is less than or equal to the predetermined value, or
a state in which the switch to be operated by the user is in the state that permits the operation of the lane keeping assist control apparatus or the lane keeping assist control apparatus is in operation, and the steering force due to an operation of the actuator is greater than the steering torque due to the steering operation by the driver.

5. A vehicle control apparatus, comprising:
an idling stop control apparatus configured to operate in a situation where a vehicle speed is less than or equal to a predetermined vehicle speed; and
a lane keeping assist control apparatus configured to operate even in the situation where the vehicle speed is less than or equal to the predetermined vehicle speed to generate a steering force with an actuator according to at least one of a detection result of a lane boundary sign and a detection result of an object having a predetermined positional relationship with respect to the lane boundary sign, wherein
the idling stop control apparatus is configured to stop or restart an engine when a predetermined parameter meets a predetermined condition, wherein the predetermined parameter varies due to, among factors including an operation of the actuator and a steering operation of a driver, only the steering operation of the driver.
